# EUROPEAN PATENT SPECIFICATION

(11) **EP 2 723 637 B1**
(45) Date of publication and mention of the grant of the patent: **12.08.2015**
(21) Application number: 11729534.5
(22) Date of filing: 23.06.2011
(51) Int. Cl.: B64C 1/14

(54) **DOORWAY WIDTH RESTRICTION SYSTEM**
EINSCHRÄNKUNGSSYSTEM FÜR TÜRÖFFNUNGSBREITE
SYSTÈME DE RESTRICTION DE LA LARGEUR D'UNE EMBRASURE DE PORTE

(43) Date of publication of application: 30.04.2014
(73) Proprietor: The Boeing Company, Chicago, IL 60606-2016 (US)
(72) Inventor: ECKERT, David Wayne, Marysville, WA 98270 (US); LENABURG, Robert J., Des Moines, WA 98198 (US); DRAKE, Michael Lane, Bellevue, WA 98008 (US); FLEMING, Michael Anthony, Bellevue, WA 98006 (US)
(74) Representative: Boult Wade Tennant
(86) International application number: PCT/US2011/041695
(87) International publication number: WO 2012/177258

(56) References cited:
- WO-A2-2010/001210
- US-A- 2 763 900
- US-A- 5 379 971
- US-A1- 2006 202 087
- US-A1- 2010 127 124

## Description

### BACKGROUND INFORMATION

### 1. Field:

The present invention relates generally to aircraft and, in particular, to door systems for aircraft. Still more particularly, the present disclosure relates to a method and apparatus for restricting the width for a doorway. US 2006/0202087 A1 discloses the features of the preamble of claim 1.

### 2. Background:

An aircraft cabin has seats that are arranged in rows with one or more aisles. The configuration of the seats also takes into account doorways in the aircraft. The configuration is designed to allow for boarding and deplaning to occur within desired times. The configurations of the seats, in part, are designed to reduce the time needed to allow passengers to enter and exit the aircraft. By reducing these times, the time that an aircraft spends at a boarding gate also may be reduced.

With commercial aircraft at an airport, the doorways are typically aligned with a boarding gate to allow passengers and flight crew to enter and exit the aircraft. A boarding gate is a partially-movable bridge that allows passengers to enter and leave an aircraft without having to be exposed to the outside environment when the door in the doorway is opened.

In rare instances, passengers may need to leave the aircraft when the aircraft is not at the gate. With these situations, the vertical distance from the doorway to the ground may be higher than desired for the passenger to safely leave the aircraft. With these situations, escape slides may be provided and used to aid the passengers in leaving the aircraft.

Each doorway may have an escape slide associated with the door. The escape slide may be deployed to allow passengers and crew members to more quickly exit the aircraft. The escape slides have a width based on the width of the doorway. For example, if the doorway allows for two people to pass at the same time, the escape slide is selected to have two lanes to accommodate the two people. A narrow escape slide with one lane is not used at wide doors for safety reasons.

The configuration of an aircraft during the specification and design stage may involve identifying the number of passengers that the aircraft will carry. Different configurations may result in different number of seats, arrangement of seats, number of doors, doorway sizes, escape slide widths, and other features being selected.

After the aircraft has been in service, the number of passengers that an aircraft can carry may be changed to some extent. This change may involve more time and costs than may be desired. Some changes, such as the size of the doorway or the number of doorways, cannot be changed without significant time and cost. As a result, reconfiguring an aircraft to add a desired number of passengers that the aircraft can carry may not always be practical.

Therefore, it would be advantageous to have a method and apparatus that takes into account at least some of the issues discussed above, as well as possibly other issues.

### SUMMARY

In one advantageous example an apparatus comprises a structure and an extended portion in the structure. The structure is configured for connection to a hinge for a door in an aircraft. The extended portion in the structure is configured to reduce a width of a doorway in which the door is located when the door is in a substantially open position.

In another advantageous example, an apparatus comprises a structure and an extended portion in the structure. The structure is configured to be connected to a door system in a vehicle. The extended portion in the structure is configured to reduce a width of a doorway in which door system is located when the door system is in an open position.

The invention provides a doorway restriction system in accordance with Claim 1. In another advantageous embodiment, a method for managing access to an aircraft in accordance with Claim 10, is provided. A door is identified in a doorway to be opened. The door is connected to a wall of the aircraft by a hinge and a structure associated with the hinge and has an extended portion. The door is moved to an open position. The hinge with the structure moves such that the extended portion in the structure reduces a width of the doorway to a desired width when the door is in the open position.

The features, functions, and advantages can be achieved independently in various embodiments of the present invention or may be combined in yet other embodiments in which further details can be seen with reference to the following description and drawings.

### BRIEF DESCRIPTION OF THE DRAWINGS

The novel features believed characteristic of the invention are set forth in the appended claims. The invention itself, however, as well as a preferred mode of use, further objectives, and advantages thereof, will best be understood by reference to the following detailed description of an advantageous embodiment of the present invention when read in conjunction with the accompanying drawings, wherein:
**Figure 1** is an illustration of an aircraft manufacturing and service method in accordance with an advantageous embodiment;
**Figure 2** is an illustration of an aircraft in which an advantageous embodiment may be implemented;
**Figure 3** is an illustration of an aircraft access environment in accordance with an advantageous embodiment;
**Figure 4** is an illustration of an aircraft in which an advantageous embodiment may be implemented;
**Figure 5** is an illustration of a doorway without a doorway restriction device in accordance with an advantageous embodiment;
**Figure 6** is an illustration of a doorway with a doorway restriction device in accordance with an advantageous embodiment;
**Figure 7** is an illustration of a doorway with a doorway restriction device in accordance with an advantageous embodiment;
**Figure 8** is an illustration of a doorway with a door having a doorway restriction device in an open position in accordance with an advantageous embodiment;
**Figure 9** is an illustration of a door in a doorway with a doorway restriction device in accordance with an advantageous embodiment;
**Figure 10** is a top cross-sectional view of a door in a doorway with a doorway restriction device in accordance with an advantageous embodiment;
**Figure 11** is an illustration of a door with a doorway restriction device in accordance with an advantageous embodiment;
**Figure 12** is an illustration of a doorway restriction device in accordance with an advantageous embodiment;
**Figure 13** is another illustration of a doorway restriction device in accordance with an advantageous embodiment;
**Figure 14** is an illustration of another view of a doorway restriction device in accordance with an advantageous embodiment;
**Figure 15** is another illustration of a doorway restriction device in accordance with an advantageous embodiment; and
**Figure 16** is an illustration of a flowchart of a process for managing access to an aircraft through a doorway in accordance with an advantageous embodiment.

### DETAILED DESCRIPTION

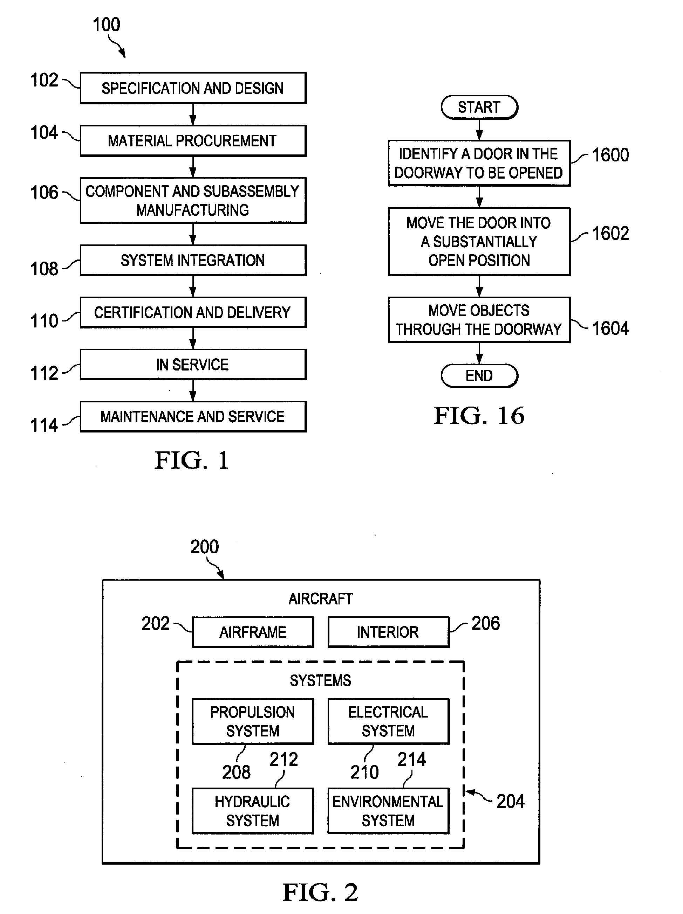

Referring more particularly **to the drawings, embodiments** of the disclosure may be described in the context of aircraft manufacturing and service method **100** as shown in **Figure 1** and aircraft **200** as shown in **Figure 2**. Turning first to **Figure 1****,** an illustration of an aircraft manufacturing and service method is depicted in accordance with an advantageous embodiment. During pre-production, aircraft manufacturing and service method **100** may include specification and design **102** of aircraft **200** in **Figure 2** and material procurement **104**.

During production, component and subassembly manufacturing **106** and system integration **108** of aircraft **200** in **Figure 2** takes place. Thereafter, aircraft **200** in **Figure 2** may go through certification and delivery **110** in order to be placed in service **112**. While in service **112** by a customer, aircraft **200** in **Figure 2** is scheduled for routine maintenance and service **114**, which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 2**, an illustration of an aircraft is depicted in which an advantageous embodiment may be implemented. In this example, aircraft **200** is produced by aircraft manufacturing and service method **100** in **Figure 1** and may include airframe **202** with plurality of systems **204** and interior **206**. Examples of systems **204** include one or more of propulsion system **208**, electrical system **210**, hydraulic system **212**, and environmental system **214.** Any number of other systems may be included. Although an aerospace example is shown, different advantageous embodiments may be applied to other industries, such as the automotive industry.

Apparatuses and methods embodied herein may be employed during at least one of the stages of aircraft manufacturing and service method **100** in **Figure 1**. As used herein, the phrase "at least one of, when used with a list of items, means that different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

In one illustrative example, components or subassemblies produced in component and subassembly manufacturing **106** in **Figure 1** may be fabricated or manufactured in a manner similar to components or subassemblies produced while aircraft **200** is in service **112** in **Figure 1**. As yet another example, a number of apparatus embodiments, method embodiments, or a combination thereof may be utilized during production stages, such as component and subassembly manufacturing **106** and system integration **108** in **Figure 1****.** A number, when referring to items, means one or more items. For example, a number of apparatus embodiments may be one or more apparatus embodiments. A number of apparatus embodiments, method embodiments, or a combination thereof may be utilized while aircraft **200** is in service **112** and/or during maintenance and service **114** in **Figure 1****.** The use of a number of the different advantageous embodiments may substantially expedite the assembly of and/or reduce the cost of aircraft **200**.

For example, one or more of the different advantageous embodiments may be used to change the usable width of a doorway within airframe **202** in aircraft **200.** In this manner, aircraft **200** may be produced using the same doorways even though different configurations may result in different types of access occurring through the doorways.

The different advantageous embodiments recognize and take into account a number of different considerations. For example, the different advantageous embodiments recognize and take into account that commercial aircraft also may include emergency exit equipment.

For example, each doorway may have a chute or escape slide associated with the doorway. The escape slides are typically inflatable and are used to evacuate from an aircraft in emergency situations. The escape slide may be used in an emergency situation by passengers and crew to exit the aircraft. An escape slide may have one lane that allows one passenger to exit at a time. In some cases, the escape slide may have two lanes that may allow two passengers to exit the aircraft at the same time using the escape slide.

Further, the different advantageous embodiments recognize and take into account that, depending on the size of the doorway, the number of lanes on an escape slide, which are present for exiting a doorway, may be different. For example, the width of the doorway may be used to identify whether an escape slide with one lane or two lanes is to be used.

The different advantageous embodiments recognize and take into account that the types of escape slides used may depend on the configuration of the aircraft. For example, the different advantageous embodiments recognize and take into account that an aircraft may require escape slides with two lanes that allow two people to exit the aircraft at a time when some particular number of seats is present in the aircraft. If the interior configuration of the aircraft is changed to include fewer seats, the different advantageous embodiments recognize and take into account that some of the wider escape slides may be removed and replaced with an escape slide with one lane at one or more of the doorways.

Using an escape slide with one lane instead of two lanes may reduce the weight and space used in an aircraft. The reduction in the weight of the aircraft may reduce the amount of fuel needed and the cost to operate the aircraft. A reduction in space may be gained by replacing a dual lane escape slide on the door with one having a single lane and may allow the installation of additional passenger seats or may allow the existing seats to be placed further apart providing more passenger comfort, thereby potentially increasing the revenue generated by the airplane. As a result, the different advantageous embodiments recognize and take into account that it is desirable to use a smaller escape slide when possible.

The different advantageous embodiments recognize and take into account that even though the number of seats in an aircraft may be reduced to allow for the use of smaller escape slides, these smaller escape slides may not be used if the doorways do not have a small enough width to support the smaller escape slides.

As a result, the different advantageous embodiments recognize and take into account that an aircraft with different configurations may result in the aircraft being manufactured with different sized doorways. This situation, however, may be undesirable if the owner of an aircraft with smaller doorways for fewer seats desires to increase the number of seats in the aircraft at a later time. The increase in the number of seats may not be possible if the escape slides and doorways do not meet regulations, such as those from the Federal Aviation Administration. In a similar fashion, an aircraft with passenger seating requiring doorways and escape slides for two lanes may not be reconfigured to use smaller escape slides even if fewer seats are used. This situation may result in less fuel savings than desired for an aircraft owner.

The different advantageous embodiments recognize and take into account that in manufacturing aircraft, it would desirable to have the same size doorways and doors for different configurations within an aircraft family. This uniformity reduces engineering costs and manufacturing costs in designing and manufacturing different doors and doorways for different configurations.

Thus, the different advantageous embodiments recognize and take into account that one manner in which smaller escape slides may be used is to restrict the number of passengers that may pass through a doorway at the same time. For example, if the doorway is wide enough to support two passengers exiting at a time, the different advantageous embodiments recognize and take into account that the doorway may be restricted to support only one passenger leaving at a time.

The different advantageous embodiments provide a method and apparatus for restricting the width of a doorway. In one advantageous embodiment, an apparatus comprises a structure configured for connecting to a hinge in a door of an aircraft. An extended portion in the structure is present and configured to reduce a width of the doorway in which the door is located when the door is in an open position.

Thus, the advantageous embodiments provide a method and apparatus for managing doorways. In one advantageous embodiment, an apparatus comprises a structure configured for connecting to a hinge for a door in an aircraft. The apparatus also comprises an extended portion in the structure configured to reduce the width of a doorway in which the door is located when the door is in an open position. In some advantageous embodiments, the structure may be connected to the door and the hinge or indirectly connected to the hinge through the door.

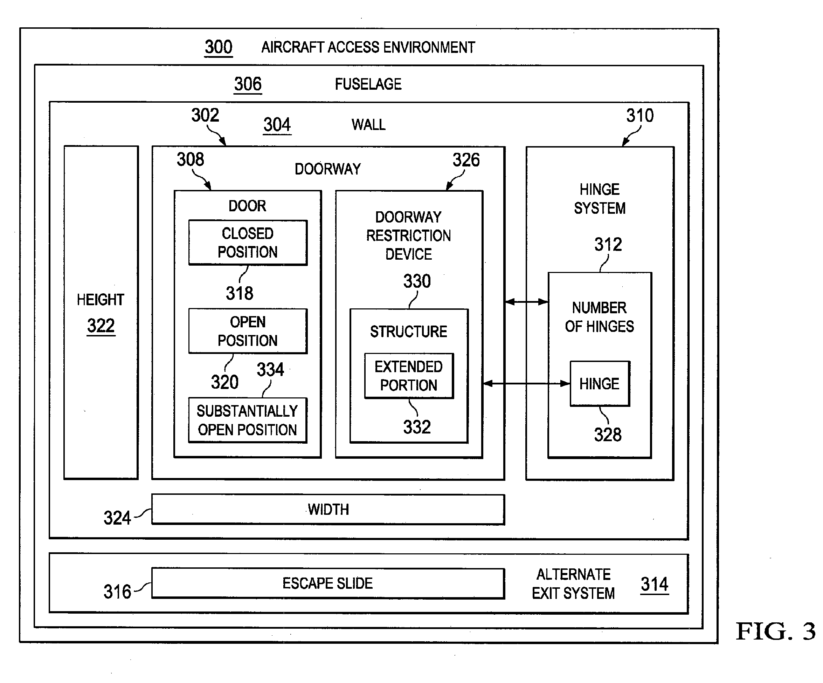

With reference now to **Figure 3****,** an illustration of an aircraft access environment is depicted in accordance with an advantageous embodiment. In this illustrative example, aircraft access environment **300** may be implemented in aircraft **200** in **Figure 2** to provide passengers, crew members, and maintenance personnel access to aircraft **200.**

Aircraft access environment **300,** in this illustrative example, has doorway **302** in wall **304** for fuselage **306.** Fuselage **306** is part of airframe **202** for aircraft **200** in **Figure 2****.**

In this illustrative example, door **308** is connected to wall **304** by hinge system **310.** Hinge system **310** comprises number of hinges **312.** Further, alternate exit system **314** also may be associated with doorway **302** in these depicted examples. For example, alternate exit system **314** may include escape slide **316**. In particular, escape slide **316** may be connected to door **308.**

Door **308** may be moved between closed position **318** and open position **320.** When in open position **320**, passengers, crew members, and other people may pass through doorway **302.** In these examples, doorway **302** has height **322** and width **324.** The number of people who may pass through doorway **302** at the same time may depend on width **324** of doorway **302**.

Depending on the configuration of the aircraft and the configuration of escape slide **316,** it may be desirable to reduce width **324** of doorway **302.** This reduction of width **324** of doorway **302** may be desirable to meet regulations and/or rules to allow for the use of a smaller size for escape slide **316.**

In these examples, width **324** for doorway **302** is reduced using doorway restriction device **326.** In these illustrative examples, doorway restriction device **326** may be connected using at least one of hinge system **310** and door **308.** By restricting width **324** of doorway **302,** it is possible to use escape slide **316** in a smaller configuration that meets a rule or policy by regulatory authorities, such as the Federal Aviation Administration. The reduction in the size of escape slide **316** may be possible even though a change in doorway **302** does not occur. Instead, the different advantageous embodiments employ doorway restriction device **326** to restrict width **324** such that only a smaller portion of width **324** in doorway **302** may be used by a passenger to pass through doorway **302**.

As used herein, the phrase "at least one of", when used with a list of items, means that different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

In this illustrative example, doorway restriction device **326** is connected to hinge **328** in number of hinges **312** in hinge system **310.** In these illustrative examples, doorway restriction device **326** may be removably placed to cover hinge **328.**

As used herein, a first component "connected to" a second component means that the first component can be connected directly or indirectly to the second component. In other words, additional components may be present between the first component and the second component. The first component is considered to be indirectly connected to the second component when one or more additional components are present between the two components. When the first component is directly connected to the second component, no additional components are present between the two components.

For example, doorway restriction device **326** may be connected directly to hinge **328.** In some cases, doorway restriction device **326** may be indirectly connected to hinge **328.** For example, doorway restriction device **326** may be connected to another component that is connected to hinge **328**. Further, doorway restriction device **326** also may be connected to other components, such as door **308**, in addition to being connected to hinge **328**.

Doorway restriction device **326** comprises structure **330.** Structure **330** is configured for connection to hinge **328** in this particular example. This connection may be directly to hinge **328** or indirectly to hinge **328,** depending on the particular implementation.

Structure **330** has extended portion **332.** Extended portion **332** in structure **330** is configured to reduce width **324** of doorway **302** in which door **308** is located.

Movement of door **308** also results in movement of hinge system **310** to place door **308** into open position **320** or substantially open position **334.** The movement of door **308** to open position **320** or substantially open position **334** results in a reduction in width **324**.

Open position **320** is a desired position for door **308** to allow people to move through doorway **302.** Open position **320** may be selected based on regulations, manufacturer guidelines, and/or other sources.

Substantially open position **334** may be some position between open position **320** and closed position **318** such that one or more people may pass through doorway **302.** For example, substantially open position **334** may be a position prior to open position **320** at which alternate exit system **314** may deploy escape slide **316** for use in exiting the aircraft.

Doorway restriction device **326** may only reduce width **324** a number of portions along height **322** of doorway **302.** Width **324** may be reduced along height **322** in portions such that passengers exiting doorway **302** may be restricted in a desired manner.

In the illustrative examples, width **324** may be reduced using doorway restriction device **326** to reduce the number of passengers that are able to pass through doorway **302** to one person at a time. In other illustrative examples, doorway restriction device **326** may be configured to allow two people to pass through doorway **302** at the same time.

In this manner, width **324** for doorway **302** may be restricted at some portions along height **322** in a manner that allows for the use of different types of escape slides for escape slide **316** without actually altering doorway **302** to change width **324** for doorway **302.** Instead, width **324** is changed at some portions along height **322** in a manner that allows controlling the number of people that may pass through doorway **302** at the same time.

The use of doorway restriction device **326** aids in passengers, crew members, or other people leaving the aircraft when alternate exit system **314** is used. In particular, the restriction of people who can pass through doorway **302** may be made to match the number of lanes in escape slide **316.**

The illustration of aircraft access environment **300** in **Figure 3** is not meant to imply physical or architectural limitations to a manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in other illustrative examples, doorway **302** may be configured to allow three passengers to pass through doorway **302** at the same time when door **308** is substantially in open position **320.** Further, in other illustrative examples, number of hinges **312** in hinge system **310** may include more than one hinge. With this type of implementation, an additional number of doorway restriction devices may be used in addition to doorway restriction device **326** for the other hinges. In still other illustrative examples, depending on the configuration of hinge system **310,** doorway restriction device **326** may be connected to door **308** in place of or in addition to hinge system **310.**

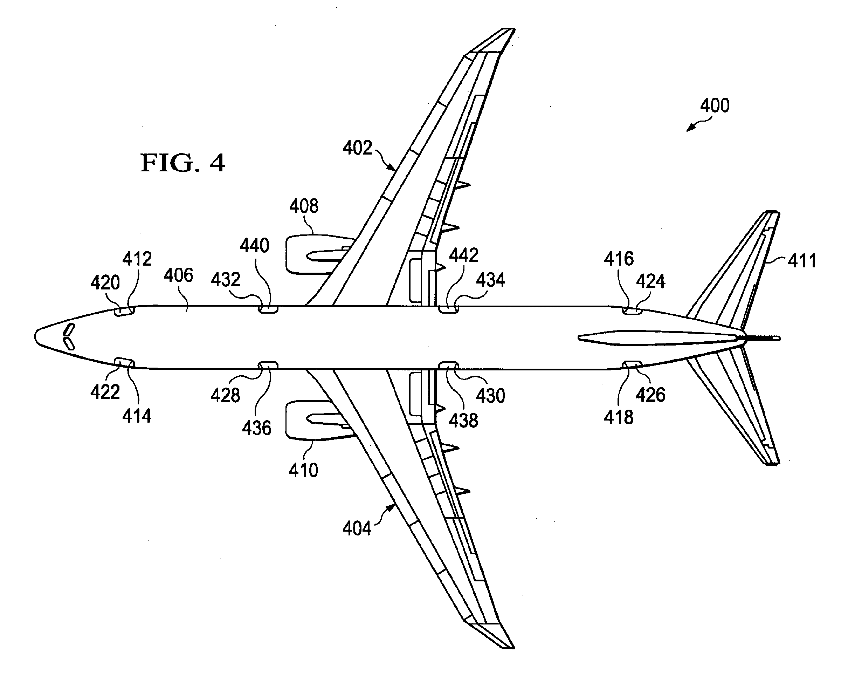

With reference now to **Figure 4****,** an illustration of an aircraft is depicted in which an advantageous embodiment may be implemented. Aircraft **400** is an example of one implementation of aircraft **200** in **Figure 2** in which aircraft access environment **300** in **Figure 3** may be implemented.

In this illustrative example, aircraft **400** has wings **402** and **404** attached to fuselage **406.** Aircraft **400** also includes engine **408,** engine **410,** and tail **411**. Further, aircraft **400** also has doorways **412, 414, 416,** and **418** in fuselage **406.** Doors **420, 422, 424,** and **426** are associated with doorways **412, 414, 416,** and **418,** respectively. Aircraft **400** also has doorways **428, 430, 432,** and **434** with doors **436, 438, 440,** and **442,** respectively.

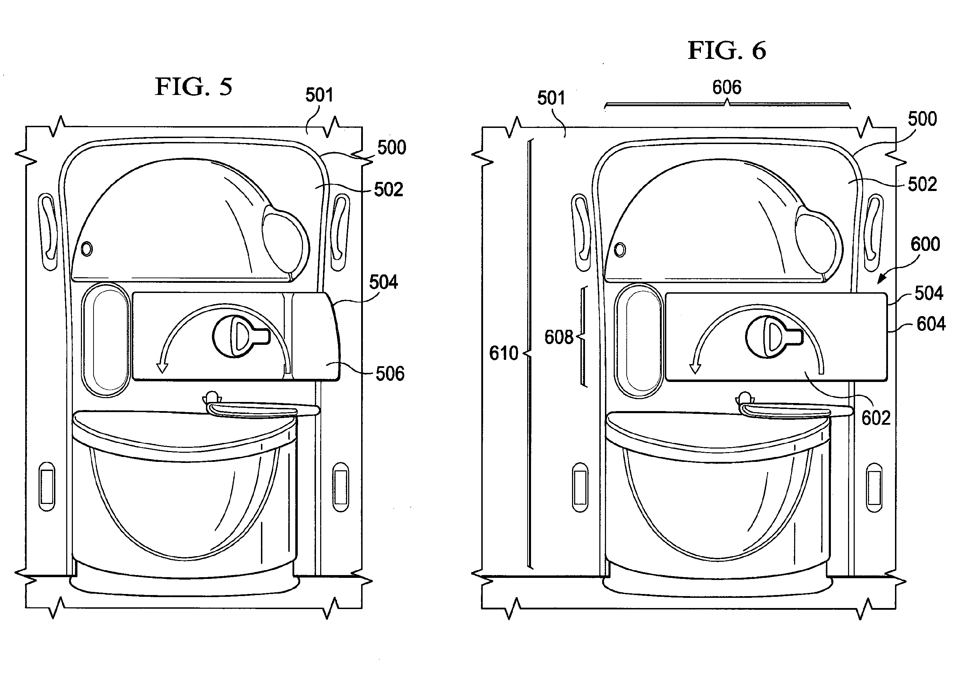

With reference now to **Figure 5****,** an illustration of a doorway without a doorway restriction device is depicted in accordance with an advantageous embodiment. In this illustrative example, doorway **500** is shown from an interior of the aircraft. Doorway **500** in wall **501** is an example of doorway **302** in **Figure 3****.**

Door **502** is illustrated in a closed position in this depicted example. Hinge **504** is an example of hinge **328** in **Figure 3****.**

In this illustrative example, a doorway restriction device is not placed over hinge **504.** Instead, cover **506** is placed over hinge **504.** Cover **506** does not have an extended portion, such as extended portion **332** as used with doorway restriction device **326** in **Figure 3****.**

With reference now to **Figure 6****,** an illustration of a doorway with a doorway restriction device is depicted in accordance with an advantageous embodiment. In this illustrative example, doorway restriction device **600** is used to restrict doorway **500.** Doorway restriction device **600** is an example of a physical implementation for doorway restriction device **326** shown in block form in **Figure 3****.**

Doorway restriction device **600** comprises structure **602**. Structure **602** takes the form of a cover in this illustrative example. Structure **602** is similar to cover **506** but also has extended portion **604.** Extended portion **604** is configured to restrict width **606** of doorway **500** when door **502** is in a substantially open position. In particular, width **606** is restricted along section **608** along height **610** of doorway **500**.

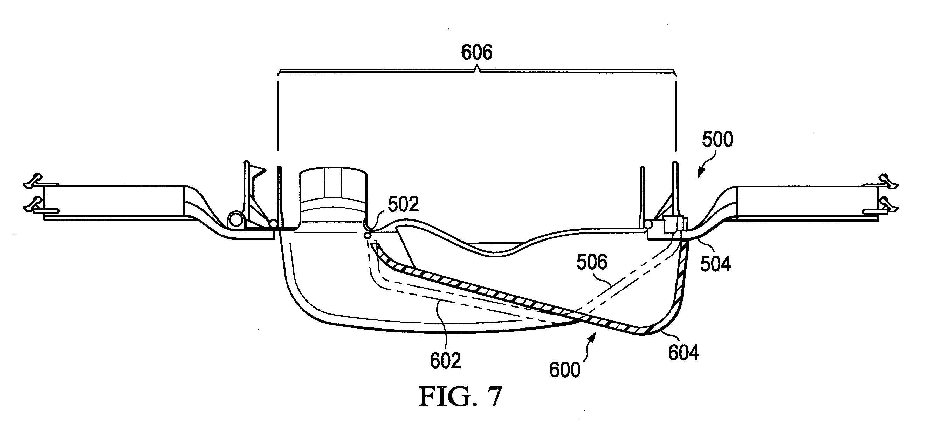

With reference now to **Figure 7**, an illustration of a doorway with a doorway restriction device is depicted in accordance with an advantageous embodiment. In this illustrative example, a top cross-sectional view of doorway **500** with door **502** is depicted in accordance with an advantageous embodiment. In this illustrative example, both cover **506** and door restriction device **600** are illustrated as being placed over hinge **504**. Cover **506** is shown in phantom.

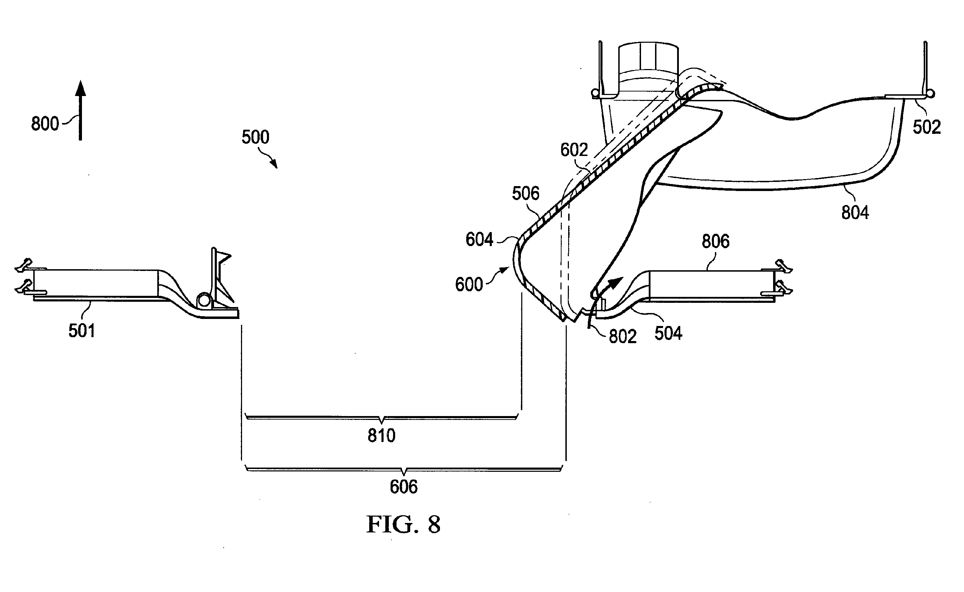

With reference now to **Figure 8**, an illustration of a doorway with a door having a doorway restriction device in an open position is depicted in accordance with an advantageous embodiment. In this illustrative example, a top cross-sectional view of doorway **500** with door **502** is depicted in accordance with an advantageous embodiment. In this illustrative example, door **502** is in a substantially open position.

As can be seen, door **502** moves outward in a direction of arrow **800** and rotates in the direction of arrow **802** such that surface **804** of door **502** is substantially parallel to surface **806** of wall **501** in the fuselage of the aircraft.

As can be seen, doorway **500** has width **606** when only cover **506** is used. When doorway restriction device **600** is used in place of cover **506**, doorway **500** has width **606** reduced to width **810**. The reduction of width **606** to width **810** is provided by extended portion **604** of structure **602** in doorway restriction device **600** in these illustrative examples. For example, width **606** may be about 42 inches without doorway restriction device **600**. With the use of doorway restriction device **600,** width **606** may be reduced to about 34 inches to about 36 inches. Of course, these illustrative values for width **606** may be different for different aircraft and may change, depending on regulations or rules pertaining to width **606** for doorway **500.**

As depicted, doorway restriction device **600** may be connected to hinge **504.** In these illustrative examples, doorway restriction device **600** may be connected to hinge **504** directly or indirectly. Further, doorway restriction device **600** may be considered to be connected to door **502** in addition to and/or in place of hinge **504** in these illustrative examples.

Regardless of the manner in which doorway restriction device **600** is connected, doorway restriction device **600** covers hinge **504** in a manner such that when door **502** is in a substantially open position, width **606** of doorway **500** may be reduced in at least some portion or length along height **610** in **Figure 6** of doorway **500** to width **810**.

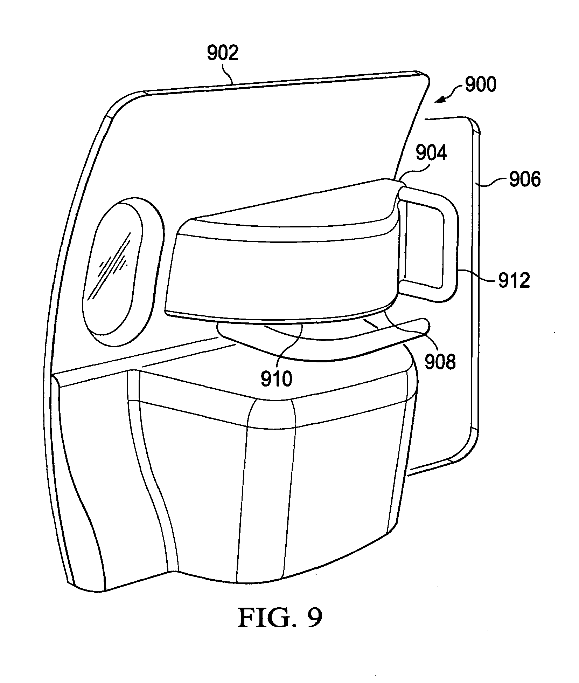

With reference now to **Figure 9****,** an illustration of a door in a doorway with a doorway restriction device is depicted in accordance with an advantageous embodiment. In this illustrative example, doorway **900** has door **902.** Hinge **904** connects door **902** to wall **906** in doorway **900.**

Doorway restriction device **908** is an example of another physical implementation for doorway restriction device **326** shown in block form in **Figure 3**. In this illustrative example, doorway restriction device **908** comprises structure **910** with extended portion **912.** In this illustrative example, extended portion **912** is a member in the form of a bar associated with structure **910.** In this example, extended portion **912** may be a U-shaped bar. In this illustrative example, extended portion **912** may be connected to hinge **904,** structure **910,** or both.

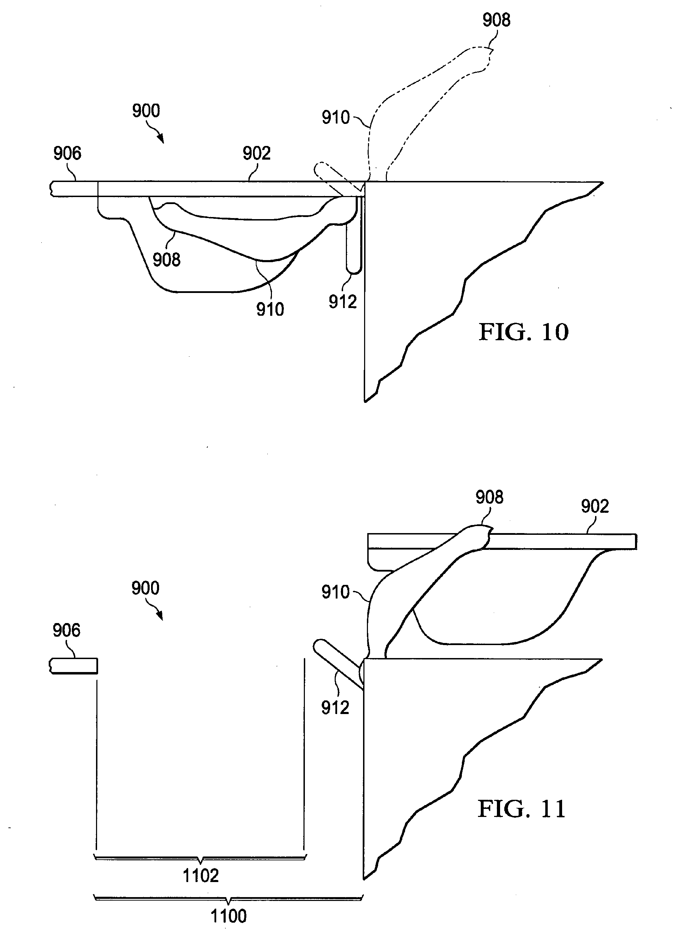

With reference now to **Figure 10****,** a top cross-sectional view of a door in a doorway with a doorway restriction device is depicted in accordance with an advantageous embodiment. In this illustrative example, door **902** is illustrated in a closed position.

With reference now to **Figure 11****,** an illustration of a door with a doorway restriction device is depicted in accordance with an advantageous embodiment. In this illustrative example, door 902 is shown in a substantially open position. As can be seen, width **1100** of doorway **900** is reduced to width **1102.** This reduction of width **1100** is caused by extended portion **912** of structure **910.**

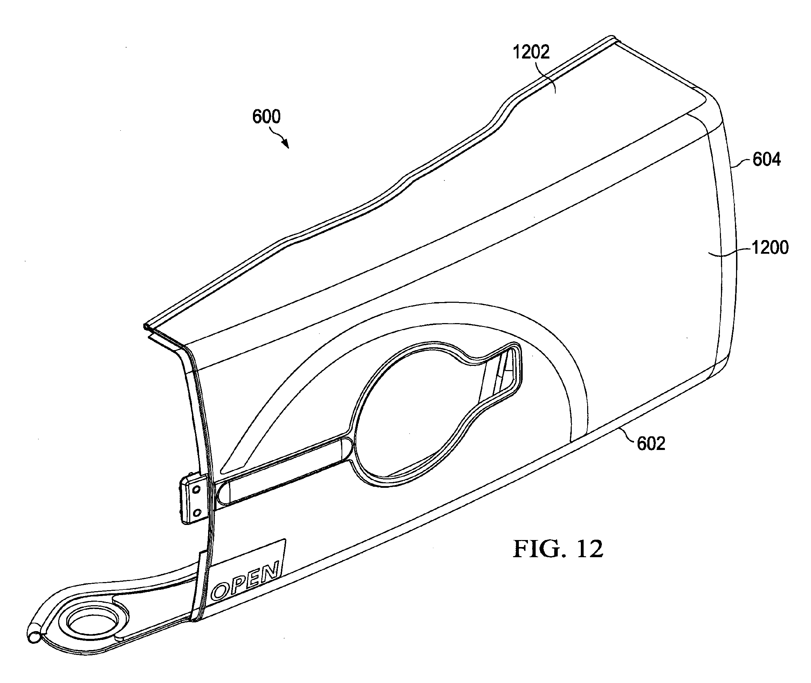

Turning now to **Figures 12-15****,** illustrations of a doorway restriction device from different views are depicted in accordance with an advantageous embodiment. With reference first to **Figure 12****,** an illustration of a doorway restriction device is depicted in accordance with an advantageous embodiment. In this illustrative example, a perspective view of doorway restriction device **600** is depicted. Doorway restriction device **600** takes the form of a cover.

Doorway restriction device **600** may be comprised of different materials. For example, doorway restriction device **600** may be comprised of a material selected from at least one of a plastic, a metal, wood, steel, aluminum, a composite material, and any other suitable type of material. The selection of the material or materials may be one that is configured to withstand normal use of the doorway. For example, the material may be selected as one that may be configured to withstand being bumped by passengers, luggage, and other equipment being moved through the doorway.

In this illustrative example, doorway restriction device **600** is shown with side **1200** and side **1202** visible. Side **1200** is the side that faces the interior of the aircraft. Side **1202** is the side that faces the top of the cabin.

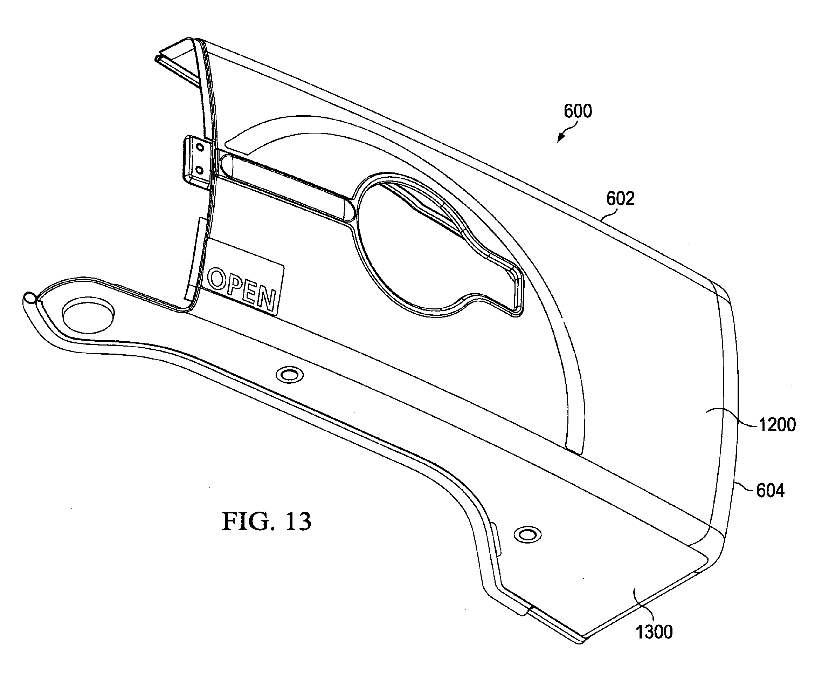

With reference now to **Figure 13****,** another illustration of a doorway restriction device is depicted in accordance with an advantageous embodiment. In this illustrative example, doorway restriction device **600** is shown in another perspective view. In this example, side **1200** and side **1300** of doorway restriction device **600** can be seen. Side **1300** represents the side facing the bottom portion of the cabin when doorway restriction device **600** is installed.

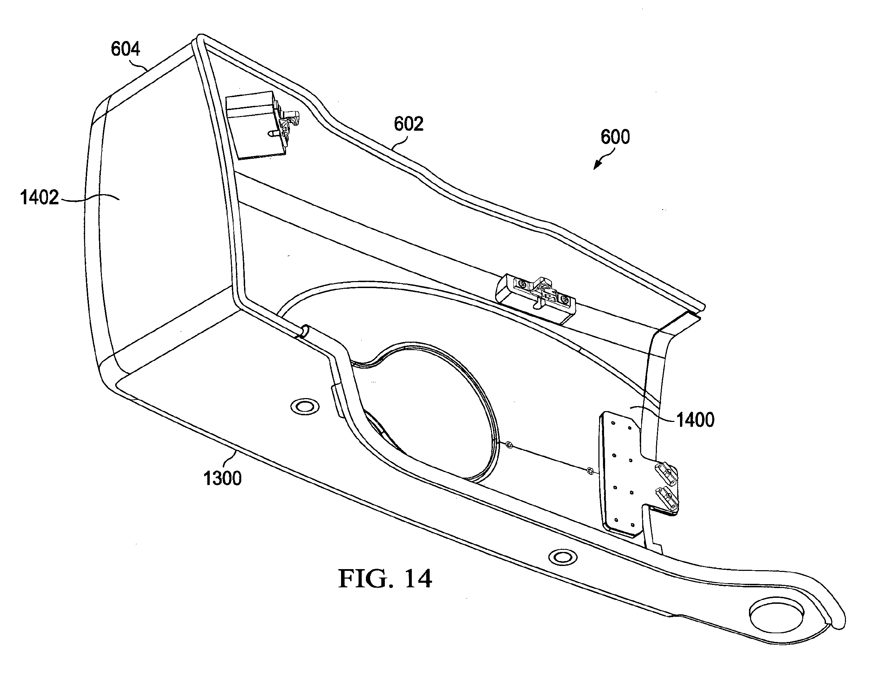

With reference now to **Figure 14****,** an illustration of another view of doorway restriction device **600** is depicted. In this illustrative example, side **1400** of doorway restriction device **600** can be seen. Side **1400** is an interior side of doorway restriction device **600**. Further, side **1402** also can be seen. Side **1402** is a side on which extended portion **604** is present.

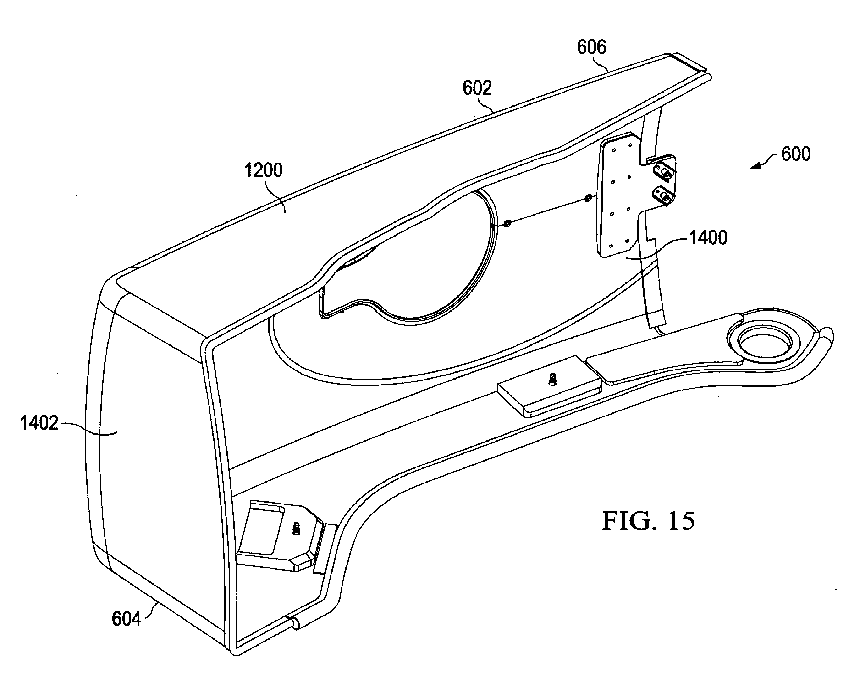

With reference now to **Figure 15****,** another illustration of a doorway restriction device is depicted in accordance with an advantageous embodiment. In this illustrative example, another perspective view of doorway restriction device **600** is illustrated.

The illustration of doorway restriction device **600** and doorway restriction device **908** in **Figures 6-15** are not meant to imply physical or architectural limitations to the manner in which a doorway restriction device may be implemented. In some illustrative examples, a doorway restriction device may be connected to cover **506** instead of replacing cover **506.** For example, doorway restriction device **326** in **Figure 3** may just be a bar and may not take the form of cover **506.** For example, without limitation, the bar may be the structure with the portion of the bar doorway restriction device that reduces width **324** from being extended portion **332** in **Figure 3****.**

The illustration of the doorway restriction devices, doors, hinges, and doorways in **Figures 4-15** may be used in combination with components in **Figure 3****,** used with components in **Figure 3****,** or a combination of the two. Additionally, the components in these figures are illustrative examples of how a component shown in block form in **Figure 3** may be implemented as physical structures.

With reference now to **Figure 16****,** an illustration of a flowchart of a process for managing access to an aircraft through a doorway is depicted in accordance with an advantageous embodiment. The process illustrated in **Figure 16** may be implemented using doorway restriction device **326** in association with door **308** and hinge system **310** for doorway **302**.

The process begins by identifying door **308** in doorway **302** to be opened (operation **1600**). Door **308** is associated with a fuselage of the aircraft by hinge **328**. Structure **330** of doorway restriction device **326** is connected to hinge **328** and has extended portion **332**.

Door **308** is moved into substantially open position **334** (operation **1602**). Hinge **328** with structure **330** moves such that extended portion **332** of structure **330** reduces width **324** of doorway **302** to a desired width when the door is substantially open.

The process then moves objects through doorway **302** (operation **1604**), with the process terminating thereafter. In these illustrative examples, objects through doorway **302** may be passengers, crew members, cargo, luggage, and other suitable types of objects.

Thus, the different advantageous embodiments provide a method and apparatus for managing access to an aircraft. The different advantageous embodiments provide a manner to change the width of the doorway. In other words, the width is changed in a manner that may restrict the number of passengers that may pass through the doorway at the same time.

This restriction does not require actually changing the doorway. Instead, a doorway restriction device is associated with a hinge, door, or both in the doorway. The doorway restriction device has an extended portion that reduces the width of the doorway along at least a portion of the height of the doorway when the door is in a substantially open position.

In this manner, different sized escape slides may be used with the same size doorway. For example, an escape slide for a doorway that only allows one passenger to pass through the doorway at a time may be used with a doorway that normally allows two passengers to pass through the doorway at the same time. The width of the doorway is restricted through the use of the doorway restriction device. In this manner, modifications to the doorways are not needed to use a different sized escape slide.

Further, in designing and manufacturing aircraft, the aircraft may all be designed and manufactured with the same size doorways. When configurations are possible to allow the use of smaller escape slides, the same size doorway may be employed with doorway restriction devices in a manner that may meet safety standards, regulations, or rules for various regulatory authorities.

The description of the present invention has been presented for purposes of illustration and description and is not intended to be exhaustive or limited to the invention in the form disclosed. Many modifications and variations will be apparent to those of ordinary skill in the art. Further, different advantageous embodiments may provide different advantages as compared to other advantageous embodiments.

The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. A doorway restriction system for an aircraft comprising:
a wall (501, 906) of an aircraft fuselage, the wall having at least one doorway (500, 900) therein;
a door (502, 902) connected to the wall by at least one hinge (504, 904), the door being moveable between a closed position and an open position, the at least one doorway (500, 900) having a width (606, 1100) when the door is in the open position;
**characterized in that**
a doorway restriction device (600, 908) is removably placed to cover the at least one hinge and connected to one or more of the door and the hinge, the doorway restriction device comprising an extended portion (604, 912) that is configured to reduce the width of the doorway when the doorway restriction device is placed to cover the at least one hinge and the door is in the open position.

2. The doorway restriction system of claim 1, wherein the doorway restriction device (600) comprises a fairing that covers at least a portion of the at least one hinge (504).

3. The doorway restriction system of claim 1, wherein the extended portion (912) is a member in the form of a bar, associated with a structure (910) of the doorway restriction device (908)

4. The doorway restriction system of claim 3, wherein the extended portion (912) is a U-shaped bar.

5. The doorway restriction system of any preceding claim, wherein the doorway restriction device (600, 908) reduces the width (606, 1100) of the doorway (500, 900) when the door (502, 902) is in the open position to allow for an exit of passengers through the doorway one at a time.

6. The doorway restriction system of any preceding claim, further comprising a cover (506) placed over the at least one hinge.

7. The doorway restriction system of claim 6, wherein the doorway restriction device is connected to the cover (506).

8. The doorway restriction system of any preceding claim, wherein the width (606, 1100) is about 106.68 cm (42 inches) and the reduced width is from about 86.36 cm (34 inches) to about 91.44 cm (36 inches).

9. The doorway restriction system of any preceding claim, wherein the doorway restriction device covers the at least one hinge (504, 904) such that when the door (502, 902) is in the open position the width (606, 1100) of the doorway (500, 900) is reduced in at least some portion or length along a height (610) of the doorway (500, 900).

10. A method for managing access to an aircraft (200), the method comprising:
identifying a door (502, 902) and a doorway (500, 900) to be opened, wherein the door (502, 902) is connected to a wall (501, 906) of the aircraft by at least one hinge (504, 904);
removably placing a doorway restriction device (600, 908) to cover the at least one hinge, the doorway restriction device being removably connected to one or more of the door and the hinge and comprising an extended portion (604, 912); and
moving the door (502, 902) to an open position, wherein the hinge with the doorway restriction device moves such that the extended portion (604, 912) reduces a width of the doorway (500, 900) from the width without the doorway restriction device to a desired width when the door is in the open position.

11. The method of claim 10, further comprising:
moving objects through the doorway (500, 900).

12. The method of claims 10 or 11, wherein the doorway restriction device (600) comprises a fairing that covers at least a portion of the hinge.

13. The method of claims 10 or 11, wherein the extended portion (912) is a member in the form of a bar, associated with a structure (910) of the doorway restriction device (908).

## Patentansprüche

1. Türöffnungsbeschränkungssystem für ein Luftfahrzeug, das aufweist:
eine Wand (501, 906) eines Luftfahrzeugrumpfes, wobei die Wand zumindest eine darin ausgebildete Türöffnung (500, 900) aufweist;
eine Tür (502, 902), die durch mindestens ein Scharnier (504, 904) mit der Wand verbunden ist, wobei die Tür zwischen einer geschlossenen Stellung und einer geöffneten Stellung bewegbar ist und die zumindest eine Türöffnung (500, 900), wenn sich die Tür in geöffneter Stellung befindet, eine Breite (606, 1100) aufweist;
**dadurch gekennzeichnet, dass**
eine Türöffnungsbeschränkungsvorrichtung (600, 908) lösbar so angebracht ist, dass sie das mindestens eine Scharnier abdeckt, und mit der Tür und/oder dem Scharnier verbunden ist, wobei die Türöffnungsbeschränkungsvorrichtung einen Erweiterungsabschnitt (604, 912) aufweist, der zum Verringern der Breite der Türöffnung ausgebildet ist, wenn die Türöffnungsbeschränkungsvorrichtung so angeordnet ist, dass sie das mindestens eine Scharnier abdeckt, und sich die Tür in der geöffneten Stellung befindet.

2. Türöffnungsbeschränkungssystem nach Anspruch 1, wobei die Türöffnungsbeschränkungsvorrichtung (600) eine Verkleidung aufweist, die zumindest einen Teil des mindestens einen Scharniers (504) abdeckt.

3. Türöffnungsbeschränkungssystem nach Anspruch 1, wobei es sich bei dem Erweiterungsabschnitt (912) um ein Element in Form eines Riegels handelt, das mit einer Struktur (910) der Türöffnungsbeschränkungsvorrichtung (908) verbunden ist.

4. Türöffnungsbeschränkungssystem nach Anspruch 3, wobei der Erweiterungsabschnitt (912) ein U-förmiger Riegel ist.

5. Türöffnungsbeschränkungssystem nach einem der vorhergehenden Ansprüche, wobei die Türöffnungsbeschränkungsvorrichtung (600, 908) die Breite (606, 1100) der Türöffnung (500, 900) verringert, wenn sich die Tür in der geöffneten Stellung befindet, sodass nur ein Passagier nach dem anderen durch die Türöffnung aussteigen kann.

6. Türöffnungsbeschränkungssystem nach einem der vorhergehenden Ansprüche, das ferner eine über dem mindestens einen Scharnier angebrachte Abdeckung (506) aufweist.

7. Türöffnungsbeschränkungssystem nach Anspruch 6, wobei die Türöffnungsbeschränkungsvorrichtung mit der Abdeckung (506) verbunden ist.

8. Türöffnungsbeschränkungssystem nach einem der vorhergehenden Ansprüche, wobei die Breite (606, 1100) etwa 106,68 cm (42 Zoll) beträgt und die verringerte Breite im Bereich von etwa 86,36 cm (34 Zoll) bis etwa 91,44 cm (36 Zoll) liegt.

9. Türöffnungsbeschränkungssystem nach einem der vorhergehenden Ansprüche, wobei die Türöffnungsbeschränkungsvorrichtung das mindestens eine Scharnier (504, 904) so abdeckt, dass die Breite (606, 1100) der Türöffnung (500, 900) in zumindest einem Bereich oder Abschnitt entlang der Höhe (610) der Türöffnung (500, 900) verringert wird, wenn sich die Tür (502, 902) in der geöffneten Stellung befindet.

10. Verfahren zum Steuern des Zugangs zu einem Luftfahrzeug (200), wobei das Verfahren umfasst:
Identifizieren einer Tür (502, 902) und einer zu öffnenden Türöffnung (500, 900), wobei die Tür (502, 902) durch mindestens ein Scharnier (504, 904) mit einer Wand (501, 906) des Luftfahrzeugs verbunden ist;
lösbares Anbringen einer Türöffnungsbeschränkungsvorrichtung (600, 908) zum Abdecken des mindestens einen Scharniers, wobei die Türöffnungsbeschränkungsvorrichtung mit der Tür und/oder dem Scharnier lösbar verbunden ist und einen Erweiterungsabschnitt (604, 912) aufweist; und
Bewegen der Tür (502, 902) in eine geöffnete Stellung, wobei sich das Scharnier zusammen mit der Türöffnungsbeschränkungsvorrichtung so bewegt, dass der Erweiterungsabschnitt (604, 912) eine Breite der Türöffnung (500, 900) von einer Breite ohne Türöffnungsbeschränkungsvorrichtung auf eine gewünschte Breite, wenn sich die Tür in der geöffneten Stellung befindet, verringert.

11. Verfahren nach Anspruch 10, das ferner umfasst:
Bewegen von Objekten durch die Türöffnung (500, 900).

12. Verfahren nach Anspruch 10 oder 11, worin die Türöffnungsbeschränkungsvorrichtung (600) eine Verkleidung aufweist, die zumindest einen Teil des Scharniers abdeckt.

13. Verfahren nach Anspruch 10 oder 11, worin es sich bei dem Erweiterungsabschnitt (912) um ein Element in Form eines Riegels handelt, das mit einer Struktur (910) der Türöffnungsbeschränkungsvorrichtung (908) verbunden ist.

## Revendications

1. Système de restriction d'une embrasure de porte pour un aéronef, comprenant :
une paroi (501, 906) d'un fuselage d'aéronef, la paroi ayant au moins une embrasure de porte (500, 900) dans celle-ci ;
une porte (502, 902) reliée à la paroi par au moins une charnière (504, 904), la porte étant déplaçable entre une position fermée et une position ouverte, la au moins une embrasure de porte (500, 900) ayant une largueur (606, 1100) lorsque la porte se trouve dans la position ouverte ;
caractérisé en qu'un dispositif de restriction d'embrasure de porte (600, 908) est placé d'une manière amovible pour couvrir ladite au moins une charnière et est connecté à une ou plusieurs de la porte et de la charnière, le dispositif de restriction d'embrasure de porte comprenant une portion étendue (604, 912) qui est configurée pour réduire la largueur de l'embrasure de la porte lorsque le dispositif de restriction de l'embrasure de la porte est placé pour couvrir ladite au moins une charnière et que la porte se trouve dans la position ouverte.

2. Système de restriction d'une embrasure de porte selon la revendication 1, dans lequel le dispositif de restriction de l'embrasure de la porte (600) comprend un carénage qui couvre au moins une portion de ladite au moins une charnière (504).

3. Système de restriction d'une embrasure de porte selon la revendication 1, dans lequel la portion étendue (912) est un élément sous la forme d'une barre, associé à une structure (910) du dispositif de restriction d'embrasure de porte (908).

4. Système de restriction d'une embrasure de porte selon la revendication 3, dans lequel la portion étendue (912) est une barre en forme de U.

5. Système de restriction d'une embrasure de porte selon l'une quelconque des revendications précédentes, dans lequel le dispositif de restriction d'embrasure de porte (600, 908) réduit la largueur (606, 1100) de l'embrasure de porte (500, 900) lorsque la porte (502, 902) est dans la position ouverte pour permettre la sortie des passagers à travers l'embrasure de porte un à la fois.

6. Système de restriction d'une embrasure de porte selon l'une quelconque des revendications précédentes, comprenant en outre un couvercle (506) placé sur ladite au moins une charnière.

7. Système de restriction d'une embrasure de porte selon la revendication 6, dans lequel le système de restriction d'embrasure de porte est relié au couvercle (506).

8. Système de restriction d'une embrasure de porte selon l'une quelconque des revendications précédentes, où la largueur (606, 1100) est d'environ 106,68 cm (42 pouces), et la largueur réduite est d'environ 86,36 cm (34 pouces) à environ 91,44 cm (36 pouces).

9. Système de restriction d'une embrasure de porte selon l'une quelconque des revendications précédentes, dans lequel le dispositif de restriction d'embrasure de porte couvre ladite au moins une charnière (504, 904) de telle sorte que lorsque la porte (502, 902) se trouve dans la position ouverte, la largueur (606, 1100) de l'embrasure de porte (500, 900) est réduite dans au moins une portion ou longueur le long de la hauteur (610) de l'embrasure de porte (500, 900).

10. Procédé de gestion de l'accès à un aéronef (200), le procédé comprenant :
identifier une porte (502, 902) et une embrasure de porte (500, 900) à ouvrir, où la porte (502, 902) est reliée à une paroi (501, 906) de l'aéronef par au moins une charnière (504, 904) ;
placer de manière amovible un dispositif de restriction d'embrasure de porte (600, 908) pour couvrir ladite au moins une charnière, le dispositif de restriction de l'embrasure de la porte étant relié de manière amovible à une ou plusieurs de la porte et de la charnière et comprenant une portion étendue (604, 912) ; et
déplacer la porte (502, 902) à une position ouverte, où la charnière avec le dispositif de restriction de l'embrasure de la porte se déplace de telle sorte que la portion étendue (604, 912) réduit une largueur de l'embrasure de la porte (500, 900) de la largueur sans le dispositif de restriction de l'embrasure de la porte à une largueur souhaitée lorsque la porte se trouve dans une position ouverte.

11. Procédé selon la revendication 10, comprenant en outre :
déplacer des objets à travers l'embrasure de la porte (500, 900).

12. Procédé selon les revendications 10 ou 11, dans lequel le dispositif de restriction de l'embrasure de la porte (600) comprend un carénage qui couvre au moins une portion de la charnière.

13. Procédé selon les revendications 10 ou 11, dans lequel la portion étendue (912) est un élément sous la forme d'une barre, associé à une structure (910) du dispositif de restriction de l'embrasure de la porte (908).
